(19)

**Europäisches Patentamt**

**European Patent Office**

**Office européen des brevets**

(11)     **EP 2 762 918 B1**

(12)     **EUROPEAN PATENT SPECIFICATION**

(45) Date of publication and mention
of the grant of the patent:
**06.01.2016  Bulletin 2016/01**

(51) Int Cl.:
*G01S 13/90* [(2006.01)]     *G01S 7/40* [(2006.01)]

(21) Application number: **14169232.7**

(22) Date of filing: **21.05.2014**

(54) **Method for analyzing effect of sub-band interference on imaging performance in synthetic aperture radar**

Verfahren zur Analyse des Effekts einer Subbandinterferenz auf eine Abbildungsleistung in einem Radar mit synthetischer Apertur

Procédé d'analyse de l'effet d'interférence de sous-bande sur la performance d'imagerie dans un radar à ouverture synthétique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2014  CN 201410019949**

(43) Date of publication of application:
**06.08.2014  Bulletin 2014/32**

(73) Proprietor: **Institute of Electronics, Chinese Academy of Sciences**
**Beijing 100190 (CN)**

(72) Inventors:
• **Deng, Yunkai**
  **Beijing 100190 (CN)**
• **Luo, Xiulian**
  **Beijing 100190 (CN)**
• **Wang, Yu**
  **Beijing 100190 (CN)**
• **Zhang, Zhimin**
  **Beijing 100190 (CN)**
• **Zhao, Fengjun**
  **Beijing 100190 (CN)**
• **Guo, Lei**
  **Beijing 100190 (CN)**

• **Wang, Wei**
  **Beijing 100190 (CN)**
• **Wang, Chunle**
  **Beijing 100190 (CN)**

(74) Representative: **Gulde & Partner**
**Patent- und Rechtsanwaltskanzlei mbB**
**Wallstraße 58/59**
**10179 Berlin (DE)**

(56) References cited:
**DE-A1-102013 216 461     US-A1- 2013 236 115**

• **LUO XIULIAN ET AL: "Influences of channel errors and interference on the OFDM-MIMO SAR", 2013 IEEE RADAR CONFERENCE (RADARCON13), IEEE, 29 April 2013 (2013-04-29), pages 1-5, XP032479527, ISSN: 1097-5659, DOI: 10.1109/RADAR.2013.6585971 ISBN: 978-1-4673-5792-0 [retrieved on 2013-08-23]**
• **YOUNIS MARWAN ET AL: "Exploring the trade-space of MIMO SAR", 2013 IEEE INTERNATIONAL GEOSCIENCE AND REMOTE SENSING SYMPOSIUM - IGARSS, IEEE, 21 July 2013 (2013-07-21), pages 4455-4458, XP032557824, ISSN: 2153-6996, DOI: 10.1109/IGARSS.2013.6723824 [retrieved on 2014-01-24]**

EP 2 762 918 B1

## Description

### TECHNICAL FIELD

The disclosure relates to Multiple-Input Multiple-Output (MIMO) and multiple sub-bands Synthetic Aperture Radar (SAR) techniques, addresses a signal interference problem in the MIMO SAR, and in particular relates to a method for analyzing a sub-band signal interference in a MIMO SAR operating with stepped frequency chirp signals.

### BACKGROUND

Recently, it has become a primary goal for a spaceborne Synthetic Aperture Radar (SAR) to have a two-dimensional high resolution wide swath. The contradiction between azimuth resolution and swath width can be resolved by using an azimuth Multiple-Input Multiple-Output (MIMO) technique (multi-channel technique). However, signals having large bandwidths have to be transmitted to achieve a high range resolution, and transmission and reception of such signals have a high requirement on hardware. When capacity of the hardware cannot meet the requirement, multiple stepped frequency chirp signals can be transmitted and wideband signals are synthesized on the ground after being received and demodulated. In order not to offset the improvement of equivalent pulse repetition frequencies implemented by the azimuth multi-channel technique, an MIMO antenna structure is used, where sub-band signals from individual apertures are transmitted simultaneously at different carrier frequencies. Since the sub-band signals are simultaneously transmitted and received, if spectra of sub-band signals cannot be separated completely, an interference between the sub-band signals will be caused. It can be seen that the sub-band interference is resulted from overlap of spectra of the sub-band signals. Due to Gibbs' effect which truncates spectra of chirp signals, there are also a few spectrum components outside the signal bandwidth, and thus even though the bandwidth of the transmitted signal is equal to the carrier frequency step (no overlap theoretically), there is also a sub-band interference.

LUO Xiulian et al: "Influences of channel errors and interference on the OFDM-MIMO SAR" (Radar Conference (RADAR), 2013 IEEE, 29 April 2013, pages 1-5) concentrates on the pulse response after bandwidth synthesis with the consideration of the interference within two adjacent sub-bands and these channel errors respectively. The theoretical derivation and simulation experiments are given.

The sub-band interference is a primary problem of the MIMO multi-sub-band SAR. Analysis of effect of an interference on imaging performance is of great importance, as it can not only provide a basis for selecting an overlap ratio of transmitted signal spectra, but also provide a priori knowledge for subsequent target detection.

### SUMMARY

(1) Technical problem to be solved

In view of the above, the disclosure is intended to acquire effect of sub-band interference on imaging performance of a Multiple-Input Multiple-Output (MIMO) multi-sub-band Synthetic Aperture Radar (SAR) from a mathematical derivation, a simulation experiment, and a measured data experiment, and therefore a method for analyzing effect of sub-band interference on imaging performance in a SAR is provided.

(2) Technical solutions

To this end, the method for analyzing effect of sub-band interference on imaging performance in a MIMO multi-sub-band SAR according to the disclosure includes the following steps:

step S1: A range impulse response model for sub-band signals with interference after being synthesized is established, to acquired information about the effect of the sub-band interference on the imaging performance;

step S2: Sub-band synthesis simulation is performed on the sub-band signals with interference using the range impulse response model, to acquire a simulation result for verifying validity of the range impulse response model and for establishing a curve of a sub-band overlap ratio versus an amplitude of a false target; and

step S3: Multi-sub-band Multiple-Input Multiple-Output (MIMO) data to be measured are simulated by multi-sub-band Single-Input Single-Output (SISO) measured data, and the simulated multi-sub-band MIMO data to be measured are imaged to verify information about the effect of the sub-band interference on the imaging performance of the simulated multi-sub-band MIMO data to be measured,

wherein the performing the sub-band synthesis simulation comprises:

step S21: creating baseband pulse signals with interference in two sub-bands according to Gibbs' effect of signal spectrum;

step S22: performing sub-band synthesis on the baseband pulse signals in two sub-bands and detecting the false target in the sub-band synthesized signal, to acquire an amplitude of the false target;

step S23: changing the sub-band bandwidth and spectra overlap ratio of the baseband pulse signals in two sub-bands, to acquire the amplitudes of the false target at different bandwidths and different overlap ratios; and

step S24: plotting the curve of the amplitude of the false target versus the spectra overlap ratio, the curve showing that the larger the sub-band width is, the smaller the amplitude of the false target caused by Gibbs's effect is; the greater the overlap ratio of the sub-band spectra is, the larger the amplitude of the false target is, and thus the acquired amplitude of the false target is closer to the amplitude of the false target in the impulse response model.

(3) Beneficial effects

The disclosure discloses analysis results of the effect of sub-band interference on imaging performance in a MIMO multi-sub-band SAR, establishes an impulse response model for a sub-band echo with Interference after being synthesized, performs an simulation experiment on the model to acquire a curve of an overlap ratio versus an amplitude of a false target caused by sub-band interference, simulates multi-sub-band MIMO measured data by multi-band SISO measured data, and imagines the simulated multi-sub-band MIMO measured data to verify the effect of the sub-band interference on the imaging performance of the measured data.

The disclosure establishes a range impulse response function with sub-band interference, it is concluded that the greater the sub-band overlap ratio is, the greater the effect of the interference is, and thus the greater the amplitude of the false target in the impulse response function is, and the specific position of the false target is also calculated; in the simulation experiment, Gibbs' effect of the signal spectra is taken into account, and the curve of the overlap ratio versus the amplitude of the false target at different bandwidths is provided; in the measured data experiment, imaging results under a sub-band width of 31.5 MHz at a sub-band overlap ratio of 5% and no sub-band overlap (an interference caused by Gibbs' effect still exists) are provided, which further verifies the effect of the sub-band interference on the imaging performance of the measured data. The disclosure provides a basic for selecting an overlap ratio for a multi-sub-band MIMO mode, and the position determination of the false target in the disclosure also provides a priori knowledge for a subsequent target detection.

**BRIEF DESCRIPTION OF THE DRAWINGS**

Fig. 1 a shows a flowchart of corresponding complete idea of the disclosure;

Fig. 1b shows a 2-transmitter 4-receiver geometrical model and a receiving-transmitting sequence diagram in a Multiple-Input Multiple-Output (MIMO) mode according to the disclosure;

Fig. 2 shows a schematic diagram of an echo separation when there is a sub-band overlap according to the disclosure;

Fig. 3 shows a schematic diagram of an echo separation when there are no sub-band overlaps according to the disclosure;

Fig. 4a shows an original diagram of a pulse compression result after sub-band synthesis under different overlap ratios according to the disclosure;

Fig. 4b shows an enlarged diagram of a real target in a pulse compression result after sub-band synthesis under different overlap ratios according to the disclosure;

Fig. 5 shows a curve of a sub-band overlap ratios versus an amplitude of a false target according to the disclosure;

Fig. 6 shows a distribution diagram of equivalent phase centers after each processing step according to the disclosure;

Fig. 7 shows an imaging process block of a MIMO multi-sub-band SAR according to the disclosure;

Fig. 8 shows an imaging result of measured data when the sub-band overlap ratio is 5% according to the disclosure; and

Fig. 9 shows an imaging result of measured data when the sub-band overlap ratio is 0% (i.e., only Interference caused by Gibbs' effect is taken into account) according to the disclosure.

## DETAILED DESCRIPTION

In order to make objects, technical solutions and advantages of the disclosure clearer, the disclosure will be further described in detail with reference to embodiments and accompanying drawings.

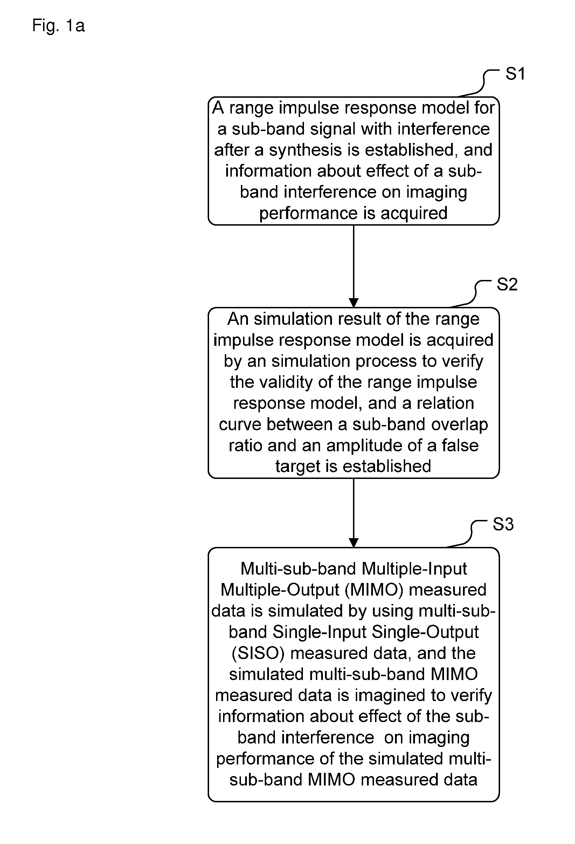

Fig. 1a shows a flowchart of a method for analyzing sub-band interference in Multiple-Input Multiple-Output (MIMO) multi-sub-band Synthetic Aperture Radar (SAR) according to the disclosure. The method includes the following steps:

step S1: A range impulse response model for sub-band signals with interference after being synthesized is established, to acquired information about the effect of the sub-band interference on the imaging performance;

step S2: Sub-band synthesis simulation is performed on the sub-band signals with interference using the range impulse response model, to acquire a simulation result for verifying validity of the range impulse response model and for establishing a curve of a sub-band overlap ratio versus an amplitude of a false target; and

step S3: Multiple-Input Multiple-Output (MIMO) measured data are simulated by multi-sub-band Single-Input Single-Output (SISO) measured data, and the simulated multi-sub-band MIMO measured data are imaged to verify information about the effect of the sub-band interference on the imaging performance of the simulated multi-sub-band MIMO measured data

In step S1, the range impulse response model is established by performing steps as below:

step S11: spectra of the sub-band signals with interference are acquired according to a spectrum component of the interference;

step S12: Range matched filtering is performed on the sub-band signals with interference, to acquire range-compressed sub-band signal spectra;

step S13: the spectrums of the sub-band signals are zero-padded in a distance frequency domain, to acquire range up-sampled spectra of the sub-band signals;

step S14: An inverse Fourier transformation is performed on the spectra of the sub-band signals, to acquire time-domain sub-band signals, and each of the time-domain sub-band signals is multiplied by a corresponding frequency shift function, to acquire a frequency-shifted time-domain sub-band signal; and

step S15: the frequency-shifted time-domain sub-band signals are added coherently to acquire the range impulse response model for the synthesized sub-band signal with interference.

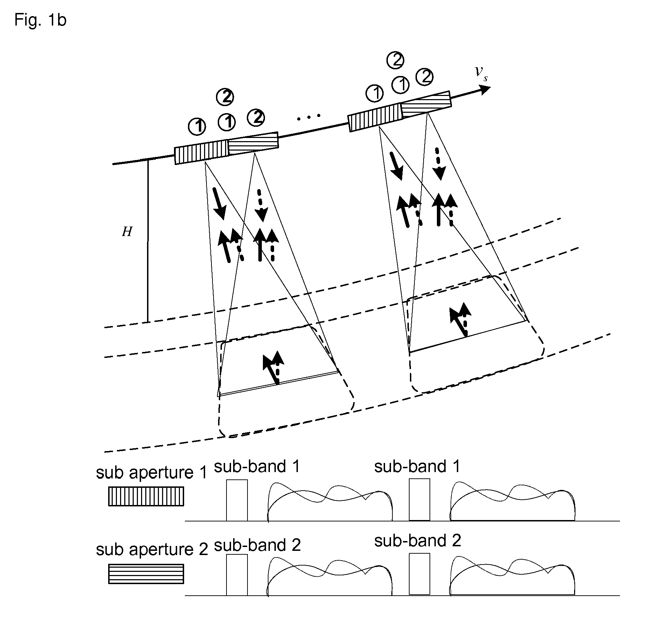

Fig. 1b shows a 2-transmitter 4-receiver geometrical model and a receiving-transmitting sequence diagram in a MIMO mode according to the disclosure. In Fig. 1b, $H$ denotes an orbital altitude, $v_s$ denotes a platform motion velocity. When transmitting, a sub-band 1 is transmitted via a sub aperture 1, a sub-band 2 is transmitted via a sub aperture 2; when receiving, two sub-band echoes are received simultaneously via a single sub aperture. Then four equivalent phase centers can be formed in each transmission and reception. The position of the equivalent phase center corresponding to the sub-band 1 is represented by ① in Fig. 1b, and the position of the equivalent phase center corresponding to the sub-band 2 is represented by ② in Fig. 1 b.

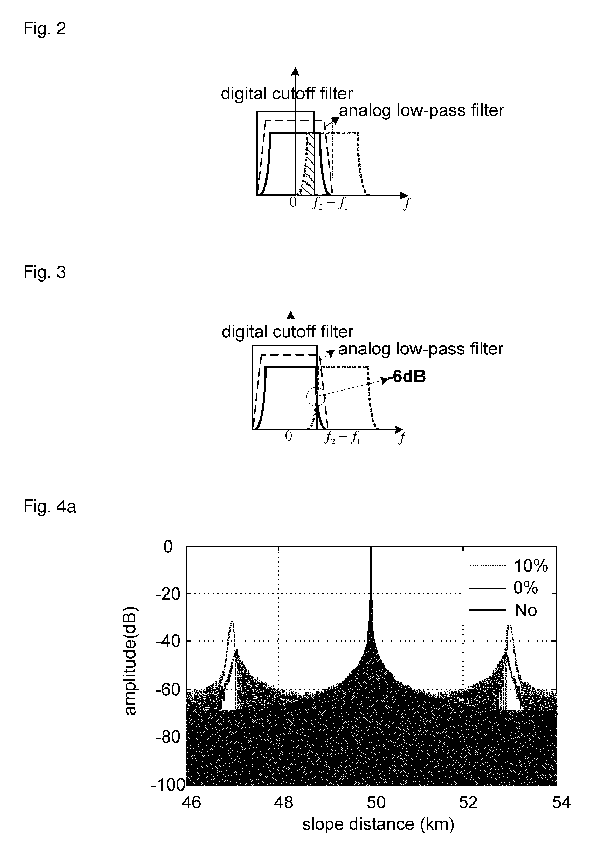

A schematic diagram of an echo separation when there is a sub-band overlap is shown in Fig. 2. Taking acquiring a baseband echo signal of the sub-band 1 as an example, the received echo signal is demodulated by using a carrier frequency $f_1$ of the sub-band 1, then the center frequency of the sub-band 1 becomes 0, and the center frequency of sub-band 2 becomes $f_2 - f_1$, where $f_2$ is the carrier frequency of the sub-band 2; the echo signal passes through an analog low-pass filter (with a bandwidth greater than the signal bandwidth) as represented by a trapezoid in the drawing, is A/D sampled and compressed and then transmitted to the ground; the received baseband echo signal is cut off in a digital domain, and the digital cutoff filter is represented by a rectangular block in the figure. The use of the cutoff filter not only can minimize the effect of the interference, but also can result in a continuous amplitude of synthesized spectrum without considering the interference. Since the interference analysis of three or more sub-bands is similar to that of the two sub-bands, the disclosure only provides the method for analyzing interference between two sub-bands.

In the case of two sub-bands, theoretically, the baseband signal spectrum of the sub-band 1 with interference is

$$
\begin{aligned}
S_1''(f) &= S_1(f) + \Delta S_2(f) \\
&= \exp\left\{-j2\pi\tau_a(f_1+f)\right\} \cdot \exp\left\{-j\pi\frac{f^2}{k_r}\right\} \cdot rect\left(\frac{f+\Delta B/4}{\Delta f+\Delta B/2}\right) \\
&+ \exp\left\{-j2\pi\tau_a(f_2+f-\Delta f)\right\} \cdot \exp\left\{-j\pi\frac{(f-\Delta f)^2}{k_r}\right\} \cdot rect\left(\frac{f-\dfrac{\Delta f}{2}+\dfrac{\Delta B}{4}}{\Delta B/2}\right)
\end{aligned}
\tag{1},
$$

where $f$ is a range frequency, $f_1$ is a carrier frequency of the sub-band 1, $f_2$ is a carrier frequency of the sub-band 2, $j$ is a imaginary unit, $\pi$ is the value of pi, $\tau_a$ is a delay corresponding to a current azimuth position, $\tau$ is a range time variable, $\Delta f$ is a stepped frequency, $\Delta B = B_s - \Delta f$ is a signal bandwidth of an overlapped portion of the sub-bands, $B_s$ is a single sub-band bandwidth, $k_r$ is a frequency modulating rate of a transmitted pulse. The first item $S_1(f)$ is a synthesized ideal time-domain waveform without interference, the second item $\Delta S_2(f)$ is interference of the sub-band 2 to the sub-band 1, and the bandwidth of the interference spectrum is $\Delta B/2$.

Similarly, the baseband signal spectrum of the sub-band 2 with interference is

$$
\begin{aligned}
S_2''(f) &= S_2(f) + \Delta S_1(f) \\
&= \exp\left\{-j2\pi\tau_a(f_2+f)\right\} \cdot \exp\left\{-j\pi\frac{f^2}{k_r}\right\} \cdot rect\left(\frac{f-\Delta B/4}{\Delta f+\Delta B/2}\right) \\
&+ \exp\left\{-j2\pi\tau_a(f_1+f+\Delta f)\right\} \cdot \exp\left\{-j\pi\frac{(f+\Delta f)^2}{k_r}\right\} \cdot rect\left(\frac{f+\dfrac{\Delta f}{2}-\dfrac{\Delta B}{4}}{\Delta B/2}\right).
\end{aligned}
\tag{2},
$$

where $\Delta S_1(f)$ is interference of the sub-band 1 to the sub-band 2.

After matched filtering, up-sampling and frequency shift, the spectra of the two sub-band signals are

$$
\begin{aligned}
S_1''\left(f+\frac{\Delta f}{2}\right) &= \exp\left\{-j2\pi\tau_a(f_c+f)\right\} \\
&\times \left[ rect\left(\frac{f+\Delta B/4+\Delta f/2}{\Delta f+\Delta B/2}\right) + \exp\left\{j2\pi f\frac{\Delta f}{k_r}\right\} \cdot rect\left(\frac{f+\dfrac{\Delta B}{4}}{\Delta B/2}\right)\right]
\end{aligned}
\tag{3}
$$

and

$$S_2'' \left( f - \frac{\Delta f}{2} \right) = \exp\left\{ -j2\pi\tau_a \left( f_c + f \right) \right\}$$

$$\times \left[ rect\left( \frac{f - \Delta B/4 - \Delta f/2}{\Delta f + \Delta B/2} \right) + \exp\left\{ -j2\pi f \frac{\Delta f}{k_r} \right\} \cdot rect\left( \frac{f - \frac{\Delta B}{4}}{\Delta B/2} \right) \right]. \qquad (4),$$

where $f_c$ is a carrier frequency of the synthesized signal.

By adding formulas (3) and (4), the added spectrum is

$$S_w''(f) = \exp\left\{ -j2\pi\tau_a \left( f_c + f \right) \right\}$$

$$\times \left[ rect\left( \frac{f}{\Delta f + B_s} \right) + \exp\left\{ j2\pi f \frac{\Delta f}{k_r} \right\} \cdot rect\left( \frac{f + \frac{\Delta B}{4}}{\Delta B/2} \right) + \exp\left\{ -j2\pi f \frac{\Delta f}{k_r} \right\} \cdot rect\left( \frac{f - \frac{\Delta B}{4}}{\Delta B/2} \right) \right]. \qquad (5).$$

The synthesized time-domain waveform is acquired through inverse Fourier transformation. The range impulse response model $S_w'(\tau)$ in step S1 is represented as below:

$$S_w''(\tau) = B_w \cdot \exp\left\{ -j2\pi\tau_a f_c \right\} \cdot \mathrm{sinc}\left\{ B_w \left( \tau - \tau_a \right) \right\} \qquad (6),$$

$$+ \frac{\Delta B}{2} \exp\left\{ -j2\pi\tau_a f_c \right\}$$

$$\times \left[ \begin{array}{l} \exp\left\{ j\pi\left( \frac{\Delta B}{2}\tau_a - \frac{\Delta B}{2}\frac{\Delta f}{k_r} \right) - j\frac{\Delta B}{4}\tau \right\} \mathrm{sinc}\left\{ \frac{\Delta B}{2}\left( \tau - \left( \tau_a - \frac{\Delta f}{k_r} \right) \right) \right\} \\ + \exp\left\{ j\pi\left( \frac{\Delta B}{2}\frac{\Delta f}{k_r} - \frac{\Delta B}{2}\tau_a \right) + j\frac{\Delta B}{4}\tau \right\} \mathrm{sinc}\left\{ \frac{\Delta B}{2}\left( \tau - \left( \tau_a + \frac{\Delta f}{k_r} \right) \right) \right\} \end{array} \right]$$

where $B_w$ is a total bandwidth of the synthesized signal; the item before the sign "+" in formula of the range impulse response model $S_w'(\tau)$ is the synthesized ideal time-domain waveform without interference, the range resolution after the synthesis is improved by $c/(2B_w)$, c is the velocity of light; the item after the sign "+" is referred to as an additional item caused by interference, the interference results in a false target, the relative amplitude of the false target is directly proportional to the overlap ratio, and the false target is $\pm c \cdot \Delta f / (2k_r)$ away from a real target.

Even though spectra of the simultaneously-transmitted sub-bands do not overlap, due to Gibbs' effect of signal spectrum, spectra of simultaneously-received sub-band signals still have interference. Fig. 3 shows a schematic diagram of an echo separation when there is no sub-band overlap according to the disclosure. In this case, the spectral amplitude of the interference is small (below -6 dB), and the effect of the interference is small. The theoretical derivation cannot take Gibbs' effect of signal spectrum into account (the mathematical formula is complicated), and the effect of sub-band interference on imaging performance will be further verified accurately in a simulation experiment and a measured data experiment.

In step S2, the sub-band synthesis simulation is performed by the following steps:

step S21: baseband pulse signals with interference in two sub-bands are created according to Gibbs' effect of a signal spectrum;

step S22: Sub-band synthesis is performed on the baseband pulse signals in two sub-bands, and a false target is detected in the sub-band synthesized signal, to acquire an amplitude of the false target;

step S23: The sub-band bandwidths and spectra overlap ratio of the two sub-band baseband pulse signals are changed, to acquire amplitudes of the false target at different bandwidths; and

step S24: The curve of the amplitude of the false target versus the spectra overlap ratio is plotted. The curve shows that the larger the sub-band width is, the smaller the amplitude of the false target caused by Gibbs's effect is. The greater the overlap ratio of the sub-band spectra is, the larger the amplitude of the false target is, and thus the acquired amplitude of the false target is closer to the amplitude of the false target in the impulse response model.

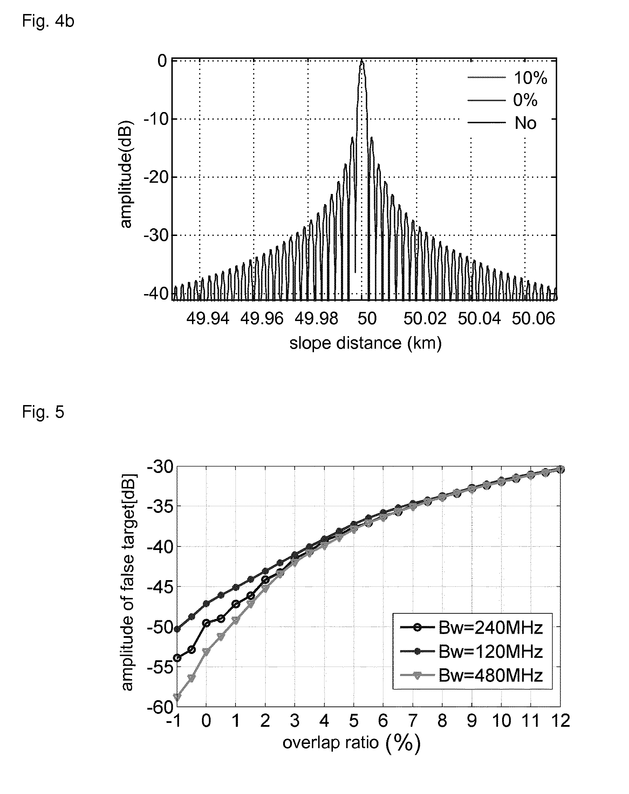

In the case that the synthesized bandwidth is 60 MHz, Fig. 4a shows an original diagram of a range pulse compression result after sub-band synthesis under different overlap ratios according to the disclosure, Fig. 4b shows an enlarged diagram of a real target in a range pulse compression result after a sub-band synthesis under different overlap ratio according to the disclosure. When the overlap ratio is 10%, the single sub-band bandwidth is 33 MHz, the frequency step is 30 MHz, and $k_r = 1.5 \times 10^{12}$. The amplitude of the false target is $20 \cdot \lg(\Delta B/B_w) = 20 \cdot \lg(1.5/60) = -32$dB. When the overlap ratio is 0%, the single sub-band bandwidth is 30 MHz, the frequency step is 30 MHz, and the amplitude of the false target caused by Gibbs' effect is -45 dB. The position of the false target is $\pm c\Delta f/2k_r = \pm 3$km away from the position of the real target.

For different synthesized bandwidths, the energy of the spectrum component below 6 dB accounts for different proportions of the total energy of the signal spectrum, and the effect of the sub-band interference caused by Gibbs' effect varies. Relation between an overlap ratio and an amplitude of a false target for several synthesized signal bandwidths are shown in Fig. 5. It can be seen from Fig. 5 that when the synthesized bandwidth is 120 MHz, the amplitude of the false target caused by Gibbs' effect is -47 dB; when the synthesized bandwidth is 240 MHz, the amplitude of the false target caused by Gibbs' effect is -49.5 dB, and when the synthesized bandwidth is 480 MHz, the amplitude of the false target caused by Gibbs' effect is -53 dB. Therefore, the greater the signal bandwidth is, the smaller of the effect of the interference caused by Gibbs' effect on imaging performance is. In addition, for a same synthesized bandwidth, the greater the overlap is, the greater the amplitude of the false target caused by sub-band interference is. For example, for a two-sub-band-synthesized bandwidth of 480 MHz, if the amplitude of the false target is required to be less than -50 dB, the overlap ratio of spectra of sub-bands should be less than 0.8%, i.e., 20 MHz.

In step S3, multi-sub-band MIMO measured data are simulated by using multi-sub-band Single-Input Single-Output (SISO) measured data through the following steps:

step S31: Data of a sub-band is delayed differently in azimuth to acquire the delayed data, and then, the delayed data are down-sampled to acquire Single-input Multiple-output (SIMO) data in the sub-band;

step S32: Data of other sub-bands are also delayed differently in azimuth to acquire the delayed data, the delayed data are down-sampled to acquire SIMO data for the current sub-band;

step S33: SIMO data of all the sub-bands are combined and inserted with interference spectrum components, to acquire simulated multi-sub-band MIMO measured data; and

step S34: The simulated multi-sub-band MIMO measured data are imaged, to acquire an image of measured data with interference.

In step S3, the simulated multi-sub-band MIMO measured data are imaged by performing steps including:

step S3a: Multi-channel reconstruction is performed on SIMO data for each sub-band, to acquire azimuth uniformly-distributed data in the single sub-band;

step S3b: An equivalent phase center of the azimuth uniformly-distributed data in each sub-band is aligned with one another;

step S3c: Sub-band synthesis is performed on all the sub-band data with the aligned equivalent phase centers, to acquire sub-band-synthesized data; and

step S3d: The sub-band synthesized data are imaged by conventional algorithm, to acquire Information about effect of sub-band interference on imaging performance of the simulated multi-sub-band MIMO measured data.

Due to the absence of MIMO multi-sub-band measured SAR raw data, in order to verify the effect of the sub-band interference on the imaging performance of the measured data, 2-transmitter 2-receiver 2-sub-bands measured data are simulated by sequentially-transmitted two-sub-band measured data, the simulation method is as below:

The received signal in each sub-band is delayed in azimuth and down-sampled by a factor of two. The azimuth delay function $H_{m,n}(f_\eta)$ for a sub-band m received via a sub aperture n is represented as below:

$$H_{m,n}\left(f_\eta\right) = \exp\left\{-j2\pi f_\eta \cdot t_{m,n}\right\} \quad (7),$$

where $f_\eta$ is azimuth Doppler frequency, $n$ represents a serial number of sub apertures, $m$ represents a serial number of sub-bands, $t_{m,n}$ represents the azimuth delay corresponding to the sub-band m and the sub aperture $n$. In the case of two sub-apertures and two sub-bands, the $t_{m,n}$ is represented as below:

$$\begin{cases} t_{1,1} = 0 \\ t_{1,2} = \dfrac{L_{sub}}{2v_s} = \dfrac{3}{4} \cdot \dfrac{1}{2PRF} \\ t_{2,1} = t_{1,2} - \dfrac{1}{4PRF} \\ t_{2,2} = t_{1,2} + t_{2,1} \end{cases} \quad (8),$$

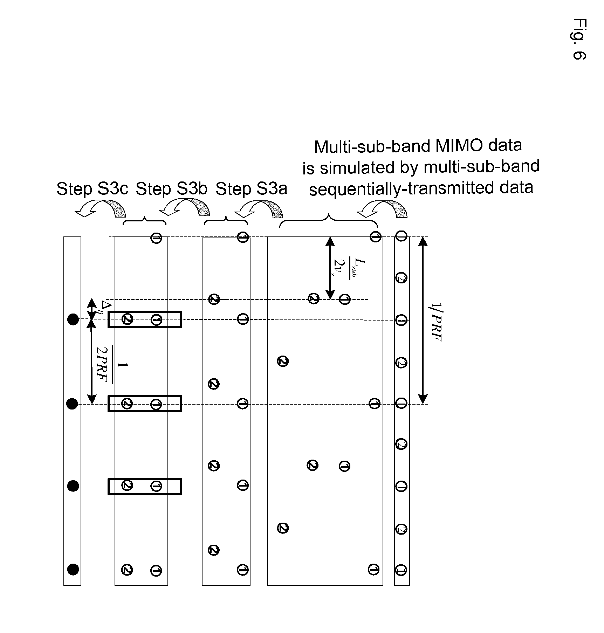

where $L_{sub}$ and $PRF$ represent respectively a sub aperture length of an antenna of a simulated MIMO multi-sub-band SAR and a pulse repetition frequency of the radar, a MIMO multi-sub-band echo is simulated by adding interference spectrum components manually. Distribution of equivalent phase centers before and after the simulation is shown in the first row and the second row in Fig. 6, where ① represents the equivalent phase center of the sub-band 1, and ② represents the equivalent phase center of the sub-band 2.

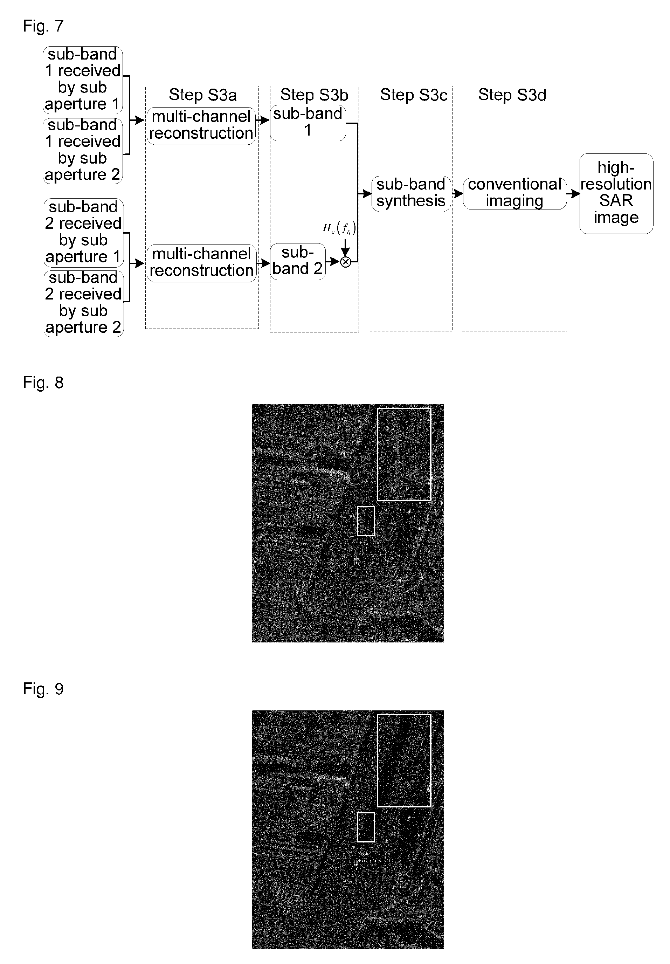

Next, an imaging flow of a MIMO multi-sub-band SAR will be introduced as shown in Fig. 7 by taking 2-transmitter 2-receiver twosub-bands as an example.

In step S3a, multi-channel reconstruction is performed on SIMO data in a single sub-band, to acquire azimuth uniformly-distributed data in the single sub-band. The distribution diagram of equivalent phase centers after the multi-channel reconstruction is shown in the third row in Fig. 6;

In step S3b, the equivalent phase center of the azimuth uniformly-distributed data in each sub-band is aligned with one another, such that the phase centers in the sub-bands to be synthesized coincide with each other. This step is implemented by multiplying the second sub-band by the function $H_c(f_\eta)$, the expression of $H_c(f_\eta)$ is given as below:

$$H_c\left(f_\eta\right) = \exp\left\{-j2\pi f_\eta \Delta_\eta\right\} \quad (9),$$

where $\Delta_\eta = \left(\dfrac{1}{N \cdot PRF} - \dfrac{L_{sub}}{2v_s}\right)$. The distribution of the aligned equivalent phase centers is shown in the fourth row in Fig. 6.

In step S3c, sub-band synthesis performed on the sub-band data with the aligned equivalent phase centers, to acquire the sub-band-synthesized data. The sub-band synthesis method at each azimuth and time is the same as the method for establishing an azimuth impulse response model. The distribution diagram of equivalent phase centers after the sub-band synthesis is shown in the fifth row in Fig. 6.

In step S3d, the sub-band-synthesized data are imaged conventionally to acquire a high-resolution SAR image. The effect of sub-band interference on imaging performance can be observed from the acquired radar image.

Now, sequentially-transmitted measured data in two sub-bands are available, the sub-band bandwidth of the sequentially-transmitted measured data is 31.5 MHz, the frequency step is 30 MHz, and the sub-band overlap ratio is 5%. Simulated MIMO multi-sub-band echo data are acquired according to the above processing method and imaged according to the imaging flow in Fig. 7, to acquire imaging results of the measured data with a sub-band overlap ratio of 5% as shown in Fig. 8. In order to simulate the effect of interference caused by Gibbs' effect on imaging performance, firstly, a single sub-band signal spectrum is filtered by a Gibbs-shaped filter, to acquire a sub-band signal spectrum with a bandwidth of 30 MHz. Then simulated MIMO multi-sub-band echo data are acquired according to the above processing method and imaged according to the imaging flow in Fig. 7, to acquire imaging results of the measured data with a sub-band overlap ratio of 0% (i.e., only interference caused by Gibbs' effect is taken into account) as shown in Fig. 9 . It can be seen from Fig. 8 and Fig. 9 that when the overlap ratio is 5%, the false target is very significant in the image; when the overlap ratio is 0%, the false target caused by Gibbs' effect in the image is not so significant, but in a dark background, it can still be identified. For a larger synthesized bandwidth, the false target caused by Gibbs' effect will be less signficant. It is thus clear that an amplitude of a false target becomes minimum when there is no overlap of sub-band spectra in a MIMO multi-sub-band mode, but it cannot be ignored completely.

## Claims

1. A method for analyzing effect of sub-band interference on imaging performance in synthetic aperture radar, **characterized in that**, the method comprises:

   step S1: establishing a range impulse response model for sub-band signals with interference after being synthesized, to acquire information the about effect of the sub-band interference on the imaging performance;
   step S2: performing sub-band synthesis simulation on the sub-band signals with interference using the range impulse response model, to acquire a simulation result for verifying validity of the range impulse response model and for establishing a curve of a sub-band overlap ratio versus an amplitude of a false target; and
   step S3: simulating multi-sub-band Multiple-Input Multiple-Output, MIMO, data to be measured by multi-sub-band Single-Input Single-Output, SISO, measured data, and imaging the simulated multi-sub-band MIMO data to be measured to verify information about the effect of the sub-band interference on the imaging performance of the simulated multi-sub-band MIMO data to be measured,

   wherein the performing the sub-band synthesis simulation comprises:

   step S21: creating baseband pulse signals with interference in two sub-bands according to Gibbs' effect of signal spectrum;
   step S22: performing sub-band synthesis on the baseband pulse signals in two sub-bands and detecting the false target in the sub-band synthesized signal, to acquire an amplitude of the false target;
   step S23: changing the sub-band bandwidth and spectra overlap ratio of the baseband pulse signals in two sub-bands, to acquire the amplitudes of the false target at different bandwidths and different overlap ratios; and
   step S24: plotting the curve of the amplitude of the false target versus the spectra overlap ratio, the curve showing that the larger the sub-band width is, the smaller the amplitude of the false target caused by Gibbs's effect is; the greater the overlap ratio of the sub-band spectra is, the larger the amplitude of the false target is, and thus the acquired amplitude of the false target is closer to the amplitude of the false target in the impulse response model.

2. The method for analyzing effect of sub-band interference on imaging performance in synthetic aperture radar according to claim 1, wherein the establishing the range impulse response model comprises:

   step S11: acquiring spectra of the sub-band signals with interference according to spectrum components at which the interference occurs;
   step S12: performing matched filtering on the sub-band signals with interference in range, to acquire range-compressed sub-band signal spectra;
   step S13: zero-padding the spectra of the sub-band signals in a range frequency domain, to acquire range up-sampled spectra of the sub-band signals;
   step S14: performing inverse Fourier transformation on the spectra of the sub-band signals to acquire time-domain sub-band signals, and multiplying each of the time-domain sub-band signals by a respective frequency shift function to acquire frequency-shifted time-domain sub-band signals; and
   step S15: adding coherently the frequency-shifted time-domain sub-band signals, to acquire the range impulse response model for sub-band signals with interference after being synthesized.

3. The method for analyzing effect of sub-band interference on imaging performance in synthetic aperture radar according to claim 1, wherein the range impulse response model $S_w^{'}\left(\tau\right)$ is represented by the following formula:

$$S_w^{'}(\tau) = B_w \cdot \exp\{-j2\pi\tau_a f_c\} \cdot \text{sinc}\{B_w(\tau - \tau_a)\}$$

$$+ \frac{\Delta B}{2}\exp\{-j2\pi\tau_a f_c\} \cdot \left[ \begin{array}{l} \exp\left\{ j\pi\left( \frac{\Delta B}{2}\tau_a - \frac{\Delta B}{2}\frac{\Delta f}{k_r} \right) - j\frac{\Delta B}{4}\tau \right\} \cdot \text{sinc}\left\{ \frac{\Delta B}{2}\left( \tau - \left( \tau_a - \frac{\Delta f}{k_r} \right) \right) \right\} \\ + \exp\left\{ j\pi\left( \frac{\Delta B}{2}\frac{\Delta f}{k_r} - \frac{\Delta B}{2}\tau_a \right) + j\frac{\Delta B}{4}\tau \right\} \cdot \text{sinc}\left\{ \frac{\Delta B}{2}\left( \tau - \left( \tau_a + \frac{\Delta f}{k_r} \right) \right) \right\} \end{array} \right],$$

wherein.an item before sign "+" in the formula of the range impulse response model $S_w^{'}(\tau)$ is referred to as a first item and an item after the sign "+" is referred to as a second item, $B_w$ is a total bandwidth of the synthesized signal, $j$ is a imaginary unit, $\tau_a$ is a range delay corresponding to a current azimuth-directional position, $f_c$ is a carrier frequency of the synthesized signal, $\tau$ is a range time variable, $\Delta B$ is a signal bandwidth of a subband-overlapped portion, $\Delta f$ is a frequency step, and $k_r$ is a frequency modulating rate of a transmitted pulse; the first item is an ideal time-domain synthesized waveform without interference, a range resolution after the synthesis is improved by $c/(2B_w)$, c is the velocity of light; the second item is an additional item caused by interference, the interference results in the false target, a relative amplitude of the false target is directly proportional to the overlap ratio, and the false target is $\pm c \cdot \Delta f / (2k_r)$ away from a real target.

4. The method for analyzing effect of sub-band interference on imaging performance in synthetic aperture radar according to claim 1, wherein the simulating multi-sub-band MIMO data to be measured by multi-sub-band SISO measured data comprises:

   step S31: delaying data in a sub-band in different azimuths and down-sampling the delayed data, to acquire Single-Transmitter Multiple-Receiver, SIMO, data in the sub-band;
   step S32: delaying data in one or more other sub-bands in different azimuths and down-sampling the delayed data, to acquire SIMO data in the one or more other sub-bands; and
   step S33: combining the SIMO data in all the sub-bands and inserting interference spectrum components, to acquire simulated multi-sub-band MIMO data to be measured.

5. The method for analyzing effect of sub-band interference on imaging performance in synthetic aperture radar according to claim 1, wherein the imaging the simulated multi-sub-band MIMO data to be measured comprises:

   step S3a: performing multi-channel reconstruction on SIMO data in the single sub-band, to acquire azimuth uniformly-distributed data in the single sub-band;
   step S3b: aligning an equivalent phase center of the azimuth uniformly-distributed data in each sub-band with one another;
   step S3c: performing sub-band synthesis on the sub-band data with the aligned equivalent phase centers, to acquire sub-band-synthesized data; and
   step S3d: imaging the sub-band synthesized data conventionally, to acquire information about the effect of sub-band interference on the imaging performance of the simulated multi-sub-band MIMO data to be measured.

**Patentansprüche**

1. Verfahren zur Analyse des Effektes einer Teilbandinterferenz auf eine Abbildungsleistung in einem Radar mit synthetischer Apertur, wobei das Verfahren umfasst:

   Schritt S1: Aufbauen eines Entfernungsimpulsantwortmodells für Teilbandsignale mit Interferenz, nachdem die Signale synthetisiert worden sind, um Informationen über den Effekt der Teilbandinterferenz auf eine Abbildungsleistung zu erfassen;
   Schritt S2: Durchführen der Teilbandsynthesesimulation auf den Teilbandsignalen mit Interferenz unter Verwendung des Entfernungsimpulsantwortmodells, um ein Simulationsergebnis für eine Verifikation der Gültigkeit des Entfernungsimpulsantwortmodells und für einen Aufbau eines Kurvenschaubildes eines Teilbandüberlappverhältnisses, aufgetragen gegen eine Amplitude eines Falschziels, zu erhalten; und

Schritt S3: Simulieren von Daten eines Vielfach-Teilbands einer Vielfach-Eingabe-Vielfach-Ausgabe, MIMO, die gemessen werden sollen, durch gemessene Daten eines Vielfach-Teilbands einer Einzel-Eingabe-Einzel-Ausgabe, SISO, und Abbilden der simulierten Vielfach-Teilband-MIMO-Daten, die gemessen werden sollen, um Informationen über den Effekt der Teilbandinterferenz auf eine Abbildungsleistung der simulierten Vielfach-Teilband-MIMO-Daten, die gemessen werden sollen, zu verifizieren,

wobei das Durchführen der Teilbandsynthesesimulation umfasst:

Schritt S21: Erzeugen von Basisbandimpulssignalen mit Interferenz in zwei Teilbändern gemäß dem Gibbseffekt eines Signalspektrums;

Schritt S22: Durchführen der Teilbandsynthese auf den Basisbandimpulssignalen in zwei Teilbändern und Detektieren des Falschziels in dem Teilband des synthetisierten Signals, um eine Amplitude des Falschziels zu erfassen;

Schritt S23: Verändern der Bandbreite des Teilbandes und des spektralen Überlappungsverhältnisses der Impulssignale des Basisbandes, um die Amplituden des Falschziels an unterschiedlichen Bandbreiten und unterschiedlichen Überlappverhältnissen zu erfassen;

Schritt S24: graphisches Darstellen der Amplitudenkurve des Falschziels, aufgetragen gegen das spektrale Überlappungsverhältnis, wobei die Kurve zeigt, dass je größer die Breite des Teilbandes ist, desto kleiner ist die Amplitude des Falschziels, was durch den Gibbseffekt verursacht ist; je größer das Überlappverhältnis der Teilbandspektren ist, desto größer ist die Amplitude des Falschziels, und daher ist die erfasste Amplitude des Falschziels enger an der Amplitude des Falschziels in dem Impulsantwortmodell.

2. Verfahren zur Analyse des Effektes einer Teilbandinterferenz auf eine Abbildungsleistung in einem Radar mit synthetischer Apertur nach Anspruch 1, wobei das Aufbauen des Entfernungsimpulsantwortmodells umfasst:

Schritt S11: Erfassen der Spektren der Teilbandsignale mit Interferenz gemäß den Spektralkomponenten, bei denen die Interferenz auftritt;

Schritt 12: Durchführen eines abgestimmten Filters auf den Teilbandsignalen mit Interferenz in Entfernung, um entfernungskomprimierte Teilbandsignalspektren zu erfassen;

Schritt S13: Auffüllen der Spektren der Teilbandsignale in einem Entfernungsfrequenzbereich mit Nullen (Zero Padding), um in der Entfernung aufwärts abgetastete Spektren der Teilbandsignale zu erfassen;

Schritt S14: Durchführen einer inversen Fouriertransformation auf den Spektren der Teilbandsignale, um Teilbandsignale des Zeitbereichs zu erhalten, und Multiplizieren jedes der Teilbandsignale des Zeitbereichs mit einer jeweiligen Frequenzverschiebungsfunktion, um frequenzverschobene Teilbandsignale des Zeitbereichs zu erhalten; und

Schritt S15: kohärentes Hinzufügen der frequenzverschobenen Teilbandsignale des Zeitbereichs, um das Entfernungsimpulsantwortmodell für Teilbandsignale mit Interferenz zu erhalten, nachdem die Synthese erfolgte.

3. Verfahren zur Analyse des Effektes einer Teilbandinterferenz auf eine Abbildungsleistung in einem Radar mit synthetischer Apertur nach Anspruch 1, wobei das Entfernungsimpulsantwortmodell $S'_w(\tau)$ durch die folgende Formel dargestellt wird:

$$S'_w(\tau) = B_w \cdot \exp\{-j2\pi\tau_a f_c\} \cdot \mathrm{sinc}\{B_w(\tau - \tau_a)\}$$

$$+ \frac{\Delta B}{2}\exp\{-j2\pi\tau_a f_c\} \cdot \begin{bmatrix} \exp\left\{j\pi\left(\frac{\Delta B}{2}\tau_a - \frac{\Delta B}{2}\frac{\Delta f}{k_r}\right) - j\frac{\Delta B}{4}\tau\right\} \cdot \mathrm{sinc}\left\{\frac{\Delta B}{2}\left(\tau - \left(\tau_a - \frac{\Delta f}{k_r}\right)\right)\right\} \\ + \exp\left\{j\pi\left(\frac{\Delta B}{2}\frac{\Delta f}{k_r} - \frac{\Delta B}{2}\tau_a\right) + j\frac{\Delta B}{4}\tau\right\} \cdot \mathrm{sinc}\left\{\frac{\Delta B}{2}\left(\tau - \left(\tau_a + \frac{\Delta f}{k_r}\right)\right)\right\} \end{bmatrix},$$

wobei ein Teilausdruck vor dem Vorzeichen "+" in der Formel des Entfernungsimpulsantwortmodells $S'_w(\tau)$ als ein erster Teilausdruck bezeichnet wird und ein Teilausdruck nach dem Vorzeichen "+" als ein zweiter Teilausdruck bezeichnet wird, wobei $B_w$ eine gesamte Bandbreite des synthetisierten Signals ist, j eine imaginäre Einheit ist, $\tau_a$ eine Entfernungsverzögerung ist, die einer laufenden Azimut-Richtungsposition entspricht, $f_c$ eine Trägerfrequenz des synthetisierten Signals ist, $\tau$ eine Entfernungszeitvariable ist, $\Delta B$ eine Signalbandbreite eines Teilbandüberlappungsabschnitts ist, $\Delta f$ ein Frequenzschritt ist und $k_r$ eine Frequenzmodulationsrate eines gesendeten Impulses ist; der erste Teilausdruck ist eine ideale synthetisierte Wellenform im Zeitbereich ohne Interferenz, nach der Synthese wird eine Entfernungsauflösung verbessert durch $c/(2B_w)$, $c$ ist die Lichtgeschwindigkeit; der zweite Teilausdruck ist ein Zusatzausdruck, der durch die Interferenz verursacht ist, die Interferenz führt zu einem Falschziel, wobei eine relative Amplitude des Falschziels dem Überlappverhältnis direkt proportional ist, und wobei das Falschziel $\pm c \cdot \Delta f/(2k_r)$ von einem realen Ziel entfernt liegt.

4. Verfahren zur Analyse des Effektes einer Teilbandinterferenz auf eine Abbildungsleistung in einem Radar mit synthetischer Apertur nach Anspruch 1, wobei das Simulieren von Vielfach-Teilband-MIMO-Daten, die gemessen werden sollen, durch gemessene Daten von Vielfach-Teilband-SISO-Daten umfasst:

Schritt S31: Verzögern der Daten in einem Teilband in verschiedenen Azimuten und ein Nach-Unten-Abtasten der verzögerten Daten, um Daten eines Einzelsenders-Vielfachempfängers, SIMO, in dem Teilband zu erhalten;
Schritt S32: Verzögern der Daten in einem oder mehreren Teilbändern in verschiedenen Azimuten und ein Nach-Unten-Abtasten der verzögerten Daten, um SIMO-Daten in dem einen oder den mehreren anderen Teilbändern zu erhalten;
Schritt S33: Verzögern der SIMO-Daten in all den Teilbändern und Einsetzen der Komponenten des Interferenzspektrums, um simulierte Vielfach-Teilband-MIMO-Daten, die gemessen werden sollen, zu erhalten.

5. Verfahren zur Analyse des Effektes einer Teilbandinterferenz auf eine Abbildungsleistung in einem Radar mit synthetischer Apertur, wobei das Abbilden der simulierten Vielfach-Teilband-MIMO-Daten, die gemessen werden sollen, umfasst:

Schritt S3a: Durchführen einer Vielfachkanalrekonstruktion auf SIMO-Daten in dem einzelnen Teilband, um gleichmäßig verteilte Azimutdaten in dem einzelnen Teilband zu erfassen;
Schritt S3b: Ausrichten eines äquivalenten Phasenmittelpunktes der gleichmäßig verteilten Azimutdaten in jedem Teilband auf einander;
Schritt S3c: Durchführen einer Teilbandsynthese auf den Teilbanddaten mit den ausgerichteten äquivalenten Phasenmittelpunkten, um synthetisierte Daten eines Teilbands zu erhalten; und
Schritt S3d: herkömmliches Abbilden der synthetisierten Daten des Teilbands, um Informationen über den Effekt der Teilbandinterferenz auf eine Abbildungsleistung der simulierten Vielfach-Teilband-MIMO-Daten, die gemessen werden sollen, zu erhalten.

**Revendications**

1. Procédé d'analyse de l'effet d'interférence de sous-bande sur la performance d'imagerie dans un radar à ouverture synthétique, **caractérisé en ce que** le procédé comprend de :

Etape S1 : établir un modèle de réponse impulsionnelle de distance pour les signaux de sous-bande avec interférence après qu'ils sont été synthétisés, afin d'acquérir une information concernant l'effet d'interférence de sous-bande sur la performance d'imagerie ;
Etape S2 : effectuer une simulation de synthèse de sous-bande sur les signaux de sous-bande avec interférence en utilisant le modèle de réponse impulsionnelle de distance, afin d'acquérir un résultat de simulation pour vérifier la validité du modèle de réponse impulsionnelle de distance et pour établir une courbe d'un rapport de superposition de sous-bande par rapport à une amplitude d'une cible erronée ; et
Etape S3 : simuler des données d'entrée multiple sortie multiple, MIM, de sous-bandes multiples à mesurer par des données mesurées d'entrée unique sortie unique, SISO, de sous-bandes multiples et imager les données MIMO de sous-bandes multiples simulées à mesurer pour vérifier une information concernant l'effet de l'interférence de sous-bande sur la performance d'imagerie des données MIMO de sous-bandes multiples simulées à mesurer,

dans lequel l'exécution de la simulation de synthèse de sous-bande comprend de :

Etape S21 : créer des signaux d'impulsions de bande de base avec interférence dans deux sous-bandes selon l'effet de Gibbs du spectre de signal ;

Etape S22 : exécuter la synthèse de sous-bande sur les signaux d'impulsion de bande de base dans deux sous-bandes et détecter la cible erronée dans le signal synthétisé de sous-bande, afin d'acquérir une amplitude de la cible erronée ;

Etape S23 : changer la bande passante de sous-bande et le rapport de superposition de spectre des signaux d'impulsions de bande de base dans deux sous-bandes, afin d'acquérir les amplitudes de la cible erronée à des bandes passantes différentes et des rapports de superposition différents ; et

Etape S24 : tracer la courbe de l'amplitude de la cible erronée par rapport au rapport de superposition de spectre, la courbe montrant que plus la largeur de sous-bande est grande, plus l'amplitude de la cible erronée causée par l'effet de Gibbs est petite ; plus le rapport de superposition des spectres de sous-bande est grand, plus l'amplitude de la cible erronée est grande, et ainsi l'amplitude acquise de la cible erronée est plus proche de l'amplitude de la cible erronée dans le modèle de réponse impulsionnelle.

**2.** Procédé d'analyse de l'effet d'interférence de sous-bande sur la performance d'imagerie dans un radar à ouverture synthétique selon la revendication 1, dans lequel l'établissement du modèle de réponse impulsionnelle de distance comprend de :

Etape S11 : acquérir les spectres des signaux de sous-bande avec interférence selon les composants de spectre auxquels l'interférence se produit ;

Etape S12 : effectuer un filtrage accordé sur les signaux de sous-bande avec interférence dans la distance, afin d'acquérir des spectres de signaux de sous-bande à distance compressée ;

Etape S13 : ajouter des zéros aux spectres des signaux de sous-bande dans un domaine de fréquence de portée, afin d'acquérir des spectres suréchantillonnés des signaux de sous-bande ;

Etape S14 : effectuer une transformée de Fourier inverse sur les spectres des signaux de sous-bande afin d'acquérir des signaux de sous-bande de domaine temporel, et multiplier chacun des signaux de sous-bande de domaine temporel par une fonction respective de déplacement de fréquence afin d'acquérir des signaux de sous-bande de domaine temporel à fréquence déplacée ; et

Etape S15 : ajouter de manière cohérente les signaux de sous-bande de domaine temporel à fréquence déplacée, afin d'acquérir le modèle de réponse impulsionnelle de distance pour les signaux de sous-bande avec interférence après qu'ils sont été synthétisés.

**3.** Procédé d'analyse de l'effet d'interférence de sous-bande sur la performance d'imagerie dans un radar à ouverture synthétique selon la revendication 1, dans lequel le modèle de réponse impulsionnelle de distance $S'_w(\tau)$ est représenté par la formule suivante :

$$S'_w(\tau) = B_w \cdot \exp\{-j2\pi\tau_a f_c\} \cdot \text{sinc}\{B_w(\tau - \tau_a)\}$$

$$+ \frac{\Delta B}{2}\exp\{-j2\pi\tau_a f_c\} \cdot \begin{bmatrix} \exp\left\{j\pi\left(\dfrac{\Delta B}{2}\tau_a - \dfrac{\Delta B}{2}\dfrac{\Delta f}{k_r}\right) - j\dfrac{\Delta B}{4}\tau\right\} \cdot \text{sinc}\left\{\dfrac{\Delta B}{2}\left(\tau - \left(\tau_a - \dfrac{\Delta f}{k_r}\right)\right)\right\} \\ + \exp\left\{j\pi\left(\dfrac{\Delta B}{2}\dfrac{\Delta f}{k_r} - \dfrac{\Delta B}{2}\tau_a\right) + j\dfrac{\Delta B}{4}\tau\right\} \cdot \text{sinc}\left\{\dfrac{\Delta B}{2}\left(\tau - \left(\tau_a + \dfrac{\Delta f}{k_r}\right)\right)\right\} \end{bmatrix},$$

dans laquelle un élément avant le signe « + » dans la formule du modèle de réponse impulsionnelle de distance $S'_w(\tau)$ est désigné comme un premier élément et un élément après le signe « + » est désigné comme un second élément, $B_w$ est une bande passante totale du signal synthétisé, j est une unité imaginaire, $\Gamma_a$ est une retard de distance correspondant à une position directionnelle azimut actuelle, $f_c$ est une fréquence porteuse du signal synthétisé, r est une variable de temporisation, $\Delta B$ est une bande passante de signal d'une portion superposée de sous-bande, $\Delta f$ est un pas de fréquence et $k_r$ est un taux de modulation de fréquence d'une impulsion transmise ; le premier élément est une forme d'onde synthétisée de domaine temporel idéal sans interférence, une résolution de distance après la synthèse est améliorée par $c/(2B_w)$, c'est la vitesse de la lumière ; le second élément est un élément additionnel causé par l'interférence, les résultats d'interférence dans la cible erronée, une amplitude relative de la cible erronée est directement proportionnelle au rapport de superposition et la cible erronée est éloignée d'une

cible réelle par $\pm c \cdot \Delta f/(2k_r)$.

4. Procédé d'analyse de l'effet d'interférence de sous-bande sur la performance d'imagerie dans un radar à ouverture synthétique selon la revendication 1, dans lequel les données MIMO de sous-bandes multiples simulées à mesurer par les données mesurées SISO à sous-bandes multiples comprennent :

Etape S31 : retarder les données dans une sous-bande dans des azimuts différents et sous-échantillonner les données retardées, afin d'acquérir des données d'émetteur unique récepteur multiple, SIMO, dans la sous-bande ;
Etape S32 : retarder les données dans une ou plusieurs sous-bandes dans S31 : retarder les données dans une sous-bande dans des azimuts différents et sous-échantillonner les données retardées, afin d'acquérir des données SIMO dans la ou les autres sous-bandes ; et
Etape S33 : combiner les données SIMO dans toutes les sous-bandes et insérer des composants de spectre d'interférence, afin d'acquérir des données MIMO de sous-bandes multiples simulées à mesurer.

5. Procédé d'analyse de l'effet d'interférence de sous-bande sur la performance d'imagerie dans un radar à ouverture synthétique selon la revendication 1, dans lequel l'imagerie des données MIMO de sous-bandes multiples simulées comprend de :

Etape S3a : effectuer une reconstruction multi-canaux sur les données SIMO dans la sous-bande unique, afin d'acquérir des données azimut distribuées uniformément dans la sous-bande unique ;
Etape S3b : aligner un centre de phase équivalent des données azimut distribuées uniformément dans chaque sous-bande l'un avec l'autre ;
Etape S3c : effectuer une synthèse de sous-bande sur les données de sous-bande avec les centres de phase équivalents alignés, afin d'acquérir des données de sous-bande synthétisées ; et
Etape S3d : imager les données de sous-bande synthétisées de manière conventionnelle, afin d'acquérir une information concernant les effets d'interférence sous-bande sur la performance d'imagerie des données MIMO de sous-bandes multiples simulées à mesurer.

Fig. 1a

S1

A range impulse response model for
a sub-band signal with interference
after a synthesis is established, and
information about effect of a sub-
band interference on imaging
performance is acquired

S2

An simulation result of the range
impulse response model is acquired
by an simulation process to verify
the validity of the range impulse
response model, and a relation
curve between a sub-band overlap
ratio and an amplitude of a false
target is established

S3

Multi-sub-band Multiple-Input
Multiple-Output (MIMO) measured
data is simulated by using multi-sub-
band Single-Input Single-Output
(SISO) measured data, and the
simulated multi-sub-band MIMO
measured data is imagined to verify
information about effect of the sub-
band interference on imaging
performance of the simulated multi-
sub-band MIMO measured data

Fig. 1b

sub aperture 1  sub-band 1           sub-band 1

sub aperture 2  sub-band 2           sub-band 2

Fig. 2

Fig. 3

Fig. 4a

Fig. 4b

Fig. 5

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Influences of channel errors and interference on the OFDM-MIMO SAR. **LUO XIULIAN et al.** Radar Conference. IEEE, 29 April 2013, 1-5